# EUROPEAN PATENT APPLICATION

(11) **EP 3 496 024 A1**
(43) Date of publication of application: **12.06.2019**
(21) Application number: 18211416.5
(22) Date of filing: 10.12.2018
(51) Int. Cl.: G06Q 30/06, B60L 3/12

(54) **METHOD FOR ADAPTING ELECTRIC VEHICLES OF VEHICLE FLEETS TO CONDITIONS OF DIFFERENT USERS**

(30) Priority: 09.12.2017 ES 201731351
(71) Applicant: Sharing Muving, S.L., 11500 El Puerto de Santa Maria-Cadiz (ES)
(72) Inventor: MARTINEZ MOYA, Miguel Angel, 28110 ALGETE-MADRID (ES); DURAN NAVARRO, Jorge, 28045 MADRID (ES); JIMENEZ BONILLA, Francisco José, 28050 MADRID (ES); PEREZ PERDIGÓ, Horacio, 28033 MADRID (ES)
(74) Representative: Padial Martinez, Ana Belen

(57) **Abstract**

Method for adapting electric vehicles in a vehicle fleet to the conditions of different users in a system comprising
identifying on a data management and processing platform (3) a registered user who requests rental of an electric vehicle (4) chosen through a mobile app (2) and determining the class of driving license of the user on the platform (3);
sending from the platform (3) identifying data selected from a class of driving license for the user to the maximum performance characteristics established in the class of driving license for the user, to a control unit (5) on the electric vehicle (4) chosen by the user;
establishing, via a control unit (7), a configuration (9a, 9b) of the motor map (9) for the chosen electric vehicle (4) that establishes the speed limit and the power limit;
showing, on an electronic regulation indicator (8) installed in the chosen electric vehicle (4), an indication (8a, 8b) of the category of approved vehicle established for the chosen electric vehicle (4).

## Description

### TECHNICAL FIELD OF THE INVENTION

This invention lies within the technical field of devices for adjusting the performance of electric vehicles, such as electric motorbikes, and is particularly useful for the sector of electric vehicle rental fleets, such as motosharing fleets.

### STATE OF THE PRIOR ART

In the transport sector loT platforms can continuously monitor the location and conditions of the charge and assets of vehicles connected via wireless sensors that send alerts in the event of any incidents (delays, damage, theft, etc.).

Electric vehicles, such as electric motorbikes and electric cars from conventional fleets, are usually connected by software technologies and loT platforms ("Internet of Things"), especially in electric vehicle fleets in which respective control units are installed. These technologies allow the users to connect to a management platform via a mobile application ("app") installed in their smartphones such that a user can look for vehicles that are nearby and choose a vehicle that they want to rent, and having identified themselves through the mobile app using the credentials with which they are registered on the platform, the platform communicates with the vehicle and authorises the identified user to use the vehicle. Moreover, these technologies allow, based on the control unit located in the vehicle, to monitor the location of the rented electric vehicle, recording the time it has been used, producing invoices for use, etc.

Throughout almost the entire world there are different types of driving licenses amongst which are those that allow their holders to drive vehicles with certain performance characteristics, such as speed and power, up to an authorised maximum. In Spain, for example, the AM license allows driving mopeds with two or three wheels and light quads of up to 50 cc and a maximum speed of 45 km/h; the A1 license allows driving motorbikes with a maximum cylinder capacity of 125 cm³ and a maximum power of 11 kW; the A2 license allows driving motorbikes with a maximum power of 35 kW; a Class A license allows driving any kind of motorbike and tricycle with engines with a maximum power of 15 kW if the holder is under 21 and without limitations thereafter; and the B license allows driving light commercial vehicles and also motorbikes up to 125 cc and a maximum power of 11 kW.

These classes of driving license correspond to types of vehicles approved for different categories so that their maximum performance is limited to the allowed characteristics. For example, the maximum performance characteristics of an L1-49 approved motorbike correspond to those specified for an AM driver's license, whereas the maximum performance characteristics of an L1-125 approved motorbike correspond to those specified for an A1 driver's license.

Conventionally, electric vehicle fleets must have different ranges of electric vehicles in order to offer electric vehicles that are approved in correspondence with the different classes driver's license for the users of such fleet vehicles. This large range has the disadvantages, amongst others, of involving a cost for the rental companies, and also that the "density" of available vehicles with higher performance for holders of driving licenses that do not allow them to drive the vehicles available could be substantially reduced. These disadvantages lead to technical problems since the vehicle rental companies have to perform maintenance on vehicles belonging to different ranges and have to transport vehicles to areas in which there is no availability of vehicles in the categories for the license classes of the users who wish to rent vehicles.

### DESCRIPTION OF THE INVENTION

This invention has as its subject matter to overcome the aforementioned disadvantages and technical problems inherent in the state of the art via a method for adapting electric vehicles in vehicle fleets to the conditions of different users.

The term "conditions" as used in this description relates to the classes of driving licenses of users who wish to rent vehicles that are approved for the corresponding different classes of driving license of the users.

The method according to the invention allows adapting the performance characteristics of the electric vehicles, preferably electric motorbikes although this could also be applied to electric cars, such that they are adapted to the different types of driving licenses that may be held by the drivers of the vehicles, and comprises
a mobile application ("app") installed in a plurality of smartphones of the respective users registered in the system;
a data management and processing platform that includes the specific conditions for each registered user comprising data identifying the type of driving license with which the different users are registered in the system, each driving license defining speed limits and power limits for a category of vehicles that the registered user is authorised to drive and which are established in the class of driving license;
onboard control units (5) installed on the electric vehicles of the vehicle fleet comprising control units that measure operating parameters for the electric vehicle and control the operating parameters for the electric vehicle based on the approved speed and power limits for each electric vehicle configured in a motor map,
wherein the method comprises
identifying on the data management and processing platform a registered user who requests rental of an electric vehicle through the mobile app and determining the class of driving license of the identified registered user;
sending data on the identified registered user from the data platform to the control unit of the electric vehicle chosen;
the method being characterised in that
the user data sent to the control unit comprises identifying data selected from between a class of driving license for the identified registered user, the maximum performance characteristics established for the class of driving license of the identified registered user;
the motor map comprises a plurality of configurations with each configuration determining operating parameters for the electric vehicle chosen, which set the speed limit and power limit that the identified registered user is authorised to drive;
and in that the method also comprises
determining, via the control unit, one of the configurations of the motor map for the chosen electric vehicle that sets the speed limit and the power limit approved for the chosen electric vehicle that the identified registered user is authorised to drive and that are established in the class of driving license;
showing, on an electronic regulation indicator installed in the chosen electric vehicle, an indication for the approved category of vehicle corresponding to the speed and power limits in the configuration of motor map established for the chosen electric vehicle.

This invention allows expanding the service area considering all the electric vehicle fleets available as a result of a process of adapting the fleet to the specific conditions of each user.

The app allows communication over the internet between the smartphone of each registered user and the data management and processing platform, where, amongst other data, there are data identifying the class of the driving license for the different users registered in the system. This driving license class defines the maximum performance characteristics of the vehicles, for example maximum power and speed, which the user is authorised to drive and that are established by the driving license class.

In response to a request for activation of a vehicle sent by an applicant user through the app to the data management and processing platform, the data management and processing platform recovers the data regarding the class of driving license for that applicant user identified in the request for activation, and sends an activation command to the onboard control unit of the vehicle that has been requested to be activated. The activation command comprises an order for adjusting the performance of the vehicle corresponding to its features, for example maximum speed and/or power, allowed for the class of the driving license of the applicant user.

The control unit measures the functional parameters of the vehicle while it is in use by the applicant user and it monitors and controls, via the adjustment unit, that the activated electric vehicle is operating in an operation mode that complies with the operating parameters established by the adjustment unit while it is activated for the applicant user.

In response to the adjustment command received and sent by the control unit, the adjustment unit establishes operating parameters for the vehicle corresponding to an operation mode for the electric vehicle that complies with the performance characteristics allowed by the class of driving license of the applicant user and configures the motor map accordingly.

The electronic regulation indicator is located in a position in the electric vehicle that is visible by the applicant user, and indicates the operation mode of the vehicle established by the operating parameters of the adjustment command.

The method that is the subject matter of the invention is integrated into the process flow of the connected electric vehicle, which starts with introducing the user into the available app and whose data are checked on the management platform which, according to this data, sends commands to the control unit onboard the electric vehicle, which communicates via standard languages with the control unit that regulates the mechanics of the vehicle and adapts its parameters according to the data for the user.

This allows adapting the electric vehicles connected in a "smart mobility" ecosystem to the conditions of each user and therefore in the configuration of their mechanic parameters (speed, power and motor map configuration). The new method will change the regulatory processes regarding licenses and the technical characterisation of connected vehicles. This will mean changing from the current licenses for vehicles, which are based on license plates with physical emblems to license plates that are supplemented by electronic and digital emblems on the onboard units or displays. This new method will favour the necessary change in the Public Administration for the regulatory control of the Authorities regarding approvals in the automotive industry and regulations for urban or interurban traffic.

The invention that is the subject matter of this patent application has the competitive advantage of using existing communication protocols and signals in the electric vehicles connected; thus providing a method that does not exist in the current state of the art that can increase the efficiency of the fleets intended for "sharing" services, substantially improving the service provided to the users and helping the Public Administration to adapt to new mobility possibilities.

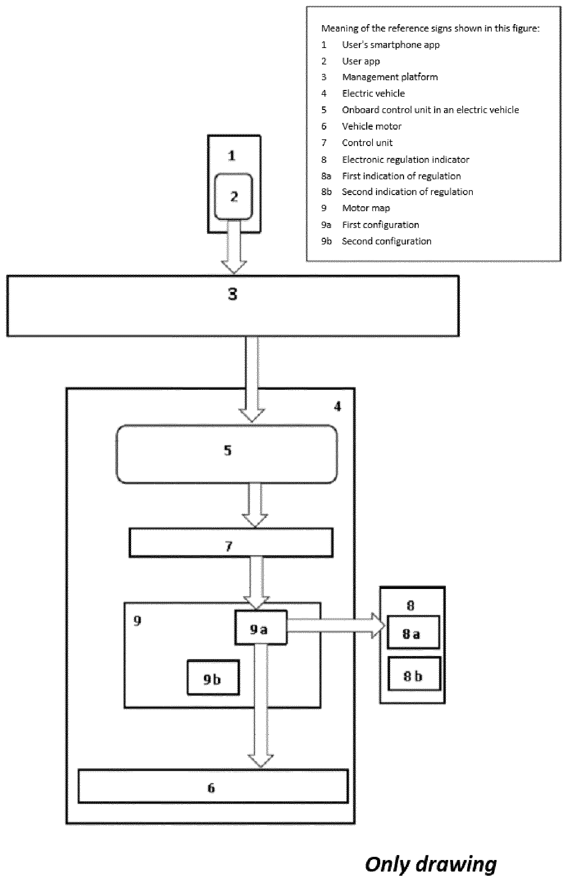

### BRIEF DESCRIPTION OF THE DRAWING

We shall now describe an embodiment of the system according to the invention based on a single drawing that represents said embodiment via a schematic block diagram.

This figure shows reference signs that identify the following documents.
- 1: Smartphone
- 2: Mobile app
- 3: Management platform
- 4: Electric vehicle
- 5: Onboard control unit in an electric vehicle
- 6: Motor of the vehicle
- 7: Control unit
- 8: Electronic regulation indicator
- 8a: First indication of regulation
- 8b: Second indication of regulation
- 9: Motor map
- 9a: First configuration
- 9b: Second configuration

### EMBODIMENT OF THE INVENTION

As shown in the single drawing, in the embodiment of the invention shown the system in which the method is carried out for adapting electric vehicles (4) to the conditions of different users a mobile app (2) installed in a plurality of smartphones (1) from different users registered in the system, a data management and processing platform (3), control units (5) onboard each of the electric vehicles (4) and respective electronic indicators of regulation (8).

The mobile app (2) allows communication over the internet between the smartphone (1) of each registered user and the data management and processing platform (3), where, amongst other data, there are data identifying the class of the driving license for the different users registered in the system. This driving license class defines the maximum performance characteristics of the vehicles, for example maximum power and speed, which the user is authorised to drive and that are established by the driving license class.

In response to a request for activation of a vehicle sent by an applicant user through the mobile app (2) to the data management and processing platform (3), the data management and processing platform (3) recovers the data regarding the class of driving license for that applicant user identified in the request for activation, and sends an activation command to the onboard control unit (5) of the vehicle (4) that has been requested to be activated. The activation command comprises an order for adjusting the performance of the vehicle (4) corresponding to its features, for example maximum speed and/or power, allowed for the class of the driving license of the applicant user.

The control unit (5) measures the functional parameters of the vehicle while it is in use by the applicant user and it monitors and controls, via the control unit (7), that the activated electric vehicle is operating in an operation mode that complies with the operating parameters established by the control unit (7) while it is activated for the applicant user.

In response to the adjustment command received and sent by the control unit (5), the control unit (7) establishes operating parameters for the vehicle (4) corresponding to an operation mode (9a, 9b) for the motor (6) of the vehicle (4) that complies with the performance characteristics allowed by the class of driving license of the applicant user and configures the motor map (9) accordingly.

The electronic regulation indicator (8) is located in a position of the vehicle (4) that is perfectly visible, for example where the license plate of the vehicle (4) is usually attached, and shows a first indication of regulation (8a) or a second indication of regulation (8b) corresponding respectively to a first operation mode (9a) and to a second operation mode (9b) for the vehicle (4) established by the operating parameters of the adjustment command.

The system that is the subject matter of the invention is integrated into the process flow for the connected electric vehicle, which starts with introducing the user into the available mobile app (2) and whose data are checked on the data management and processing platform (3) which, according to this data, sends commands to the control unit (5) onboard the electric vehicle (4), which communicates via standard languages with the control unit (7) that regulates, through the motor map (9) the performance characteristics of the motor (6) of the vehicle (4), adapting its parameters according to the data for the user.

## Claims

1. Method for adapting electric vehicles in a vehicle fleet to the conditions of different users in a system comprising
a mobile application (2) installed in a plurality of smartphones (1) of the respective users registered in the system;
a data management and processing platform (3) that includes the specific conditions for each registered user comprising data identifying the type of driving license with which the different users are registered in the system, each driving license defining speed limits and power limits for a category of vehicles (4) that the registered user is authorised to drive and which are established in the class of driving license;
onboard control units (5) installed on the electric vehicles (4) of the vehicle fleet comprising control units (7) that measure operating parameters for the electric vehicle (4) and control the operating parameters for the electric vehicle based on the approved speed and power limits for each electric vehicle (4) configured in a motor map (9),
wherein the method comprises
identifying on the data management and processing platform (3) a registered user who requests rental of an electric vehicle (4) chosen through the mobile app (2) and determining the class of driving license of the identified registered user;
sending data for the identified registered user from the platform (3) to the control unit (5) of the chosen electric vehicle (4);
**characterised in that**
the user data sent to the control unit (5) comprises identifying data selected from between a class of driving license for the identified registered user and the maximum performance characteristics established for the class of driving license of the identified registered user;
the motor map (9) comprises a plurality of configurations (9a, 9b), with each configuration (9a, 9b) determining operating parameters for the chosen electric vehicle (4), which set the speed limit and power limit that the identified registered user is authorised to drive;
and **in that** the method also comprises
determining, via the control unit (7), one of the configurations (9a, 9b) of the motor map (9) for the chosen electric vehicle (4) that sets the speed limit and the power limit approved for the chosen electric vehicle (4) that the identified registered user is authorised to drive and that are established in the class of driving license;
showing, on an electronic regulation indicator (8) installed in the chosen electric vehicle (4), an indication (8a, 8b) for the approved category of vehicle corresponding to the speed and power limits in the motor map (9) configuration (9a, 9b) established for the chosen electric vehicle (4).

2. Method for adapting, according to claim 1, **characterised in that** the electric vehicles are electric motorbikes.
